# EUROPEAN PATENT APPLICATION

(11) **EP 2 237 556 A1**
(43) Date of publication of application: **06.10.2010**
(21) Application number: 09004729.1
(22) Date of filing: 31.03.2009
(51) Int. Cl.: H04N 7/173, H04N 5/445

(54) **A method of providing television program information**

(71) Applicant: Sony United Kingdom Limited, Weybridge, Surrey KT13 0XW (GB)
(72) Inventor: Simoes Rodrigues, Jose Alexandre, 84028 Landshut (DE); Raesig, Tassilo Volker, 84028 Landshut (DE); Heider, Frank Fritz, 82110 Germering (DE); Hnyk, Ruediger, 86316 Friedberg (DE)
(74) Representative: Müller - Hoffmann & Partner

(57) **Abstract**

A method of providing information, comprising: capturing, at a first receiver receiving a television broadcast signal, a live image of a television channel of the television broadcast signal; transmitting the captured live image from the first receiver to a server, the server being remotely located from the first receiver; transmitting the captured live image from the server to a second receiver; and displaying the captured live image together with information associated with the television channel at the second receiver.

## Description

An embodiment of the invention relates to a method of providing information. Further embodiments of the invention relate to a receiver and a server for enhancing a user's television experience.

### BACKGROUND

Nowadays, a multitude of television channels and programs is available for a user of a television receiver.

It is an object of the invention to provide a method of providing information on television channels and/or programs, enhancing a user's television experience. It is a further object that the method be cost-effective and adaptable to a number of television channels available. Further objects are to provide a respective receiver and server.

This object is solved by a method, a receiver and a server according to the independent claims.

Further details of the invention will become apparent from the consideration of the drawings and the ensuing description.

### BRIEF DESCRIPTION OF THE SEVERAL VIEWS OF THE DRAWINGS

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference of the following detailed description. The elements of the drawings are not necessarily to scale relative to each other. Like reference numerals designate corresponding similar parts.
- Fig. 1: illustrates an embodiment of a method of providing television program information.

- Fig. 2: illustrates a further embodiment of a method of providing television program information.
- Fig. 3: illustrates a system of providing television program information.
- Fig. 4: illustrates a further embodiment of a system including a server and a receiver for providing television program information.
- Fig. 5: illustrates still a further embodiment of a system including a plurality of receivers and a server for providing television program information.
- Fig. 6a: illustrates an embodiment of a method of providing television program information based on temporal conditions.
- Fig. 6b: illustrates the embodiment of Fig. 6a under different temporal conditions.
- Fig. 7a: illustrates still a further embodiment of a method of providing television program information including playlists assigned to a television channel and/or program.
- Fig. 7b: illustrates a further embodiment of the message providing playlists, the playlists being assigned to programs.

### DETAILED DESCRIPTION

In the following, embodiments of the invention are described. It is important to note that all described embodiments may be combined in a way, i.e. there is no limitation that certain described embodiments may not be combined with others. Further, it should be noted that same reference signs throughout the Figures denote same or similar elements.

It is further to be understood that other embodiments may be utilized and structural or logical changes may be made without departing from the scope of the invention. The following detailed description, therefore, is not to be taken in a limiting sense, and the scope of the present invention is defined by the appended claims.

It is to be understood that the features of the various embodiments described herein may be combined with each other, unless specifically noted otherwise.

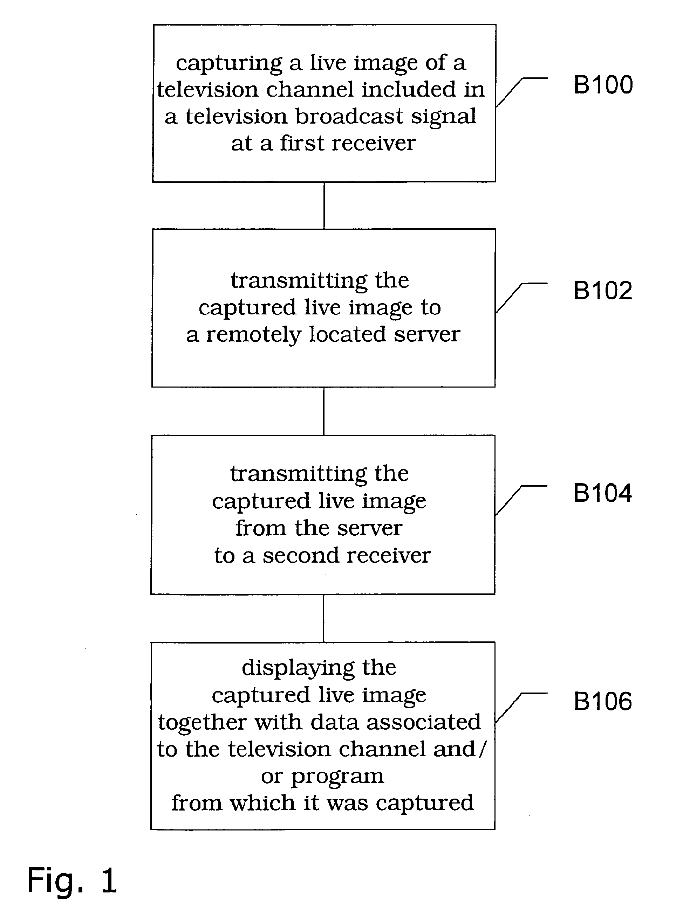

In Fig. 1, an embodiment of a method of providing television program information is illustrated. At B100, a live image of a television channel of a television broadcast signal is captured by a first receiver receiving the television broadcast signal. At B102, the captured live image is transmitted from the first receiver to a server that is remotely located from the first receiver. At B104, the captured live image is transmitted from the server to a second receiver. At the second receiver, the captured live image is displayed together with information associated with the television channel, as illustrated at B106.

"Channel" should be understood as that which is conventionally understood by a user, e.g. BBC1, ZDF, TF1 or Fox News, which is termed a service in the DVB environment. Program or Event should be understood as broadcast of finite duration on a channel, such as Desperate Housewives, Tuesday 24 March, 18.45 to 19:00 and a channel name or number.

The broadcast signal received by the first receiver may, for example, be a digital television signal, e.g. according to a DVB, ATSC, ISDB or DMB standard. Accordingly, transmission of the broadcast signal may be realized by terrestrial transmission (DVB-T, DVB-T2, DVB-H, DVB-SH, ATSC, ATSC-M/H, ISDB-T or T-DMB), by cable transmission (DVB-C, ATSC, ISDB-C), by microwave transmission (DVB-MT, DVB-MC or DVB-MS), by satellite transmission (DVB-S, DVB-S2, DVB-SH, DVB-SMATV, ISDB-S or S-DMB) and/or by internet transmission (DVB-IPTV). The broadcast signal may be a television signal including at least one television channel or service. The television channel may broadcast a sequence of programs, i.e. events. Video information of the television channels may be encoded according to a standard, such as MPEG2 or MPEG4.

The first receiver may include one or several tuners for tuning to the television channels. The live image (still image) may then be captured from a video stream, e.g. by storing one of the image frames included in the video stream. The video stream may currently be viewed / displayed, or may be received by a tuner in the background.

The live image may be an identical copy of an image frame included in the video stream, or may be a reduced-sized version of the image frame, such as a thumbnail or a television thumb shot. The image may further be compressed, e.g. according to an image compression standard. Compression may, for example, take place before transmitting the live image to the server at B102.

The captured live image may be transmitted to the server through any suitable network to which the first receiver and the server have access. The first receiver may, for example, be a hybrid device having the ability to receive television signals over one or a plurality of tuners, and the ability to communicate with other devices via a further network such as the internet, e.g. over an internet protocol (IP) back channel.

The captured live image may then be transmitted from the server to this second receiver either via the broadcast network or via a still further network to which both, the server and the second receiver, have access. The further network may for example also be the internet.

At the second receiver, the captured live image may then be displayed together with data associated to the television channel and/or program from which the captured live image was captured. For displaying, various possibilities exist. For example, it is possible to display thumbnails received from the server together with an identifier of the television channel from which the thumbnails were captured in a predefined area of the display of the second receiver. The predefined area thereby may provide a "preview/ crossview functionality", allowing a user of the second receiver watching a program on his display, to be informed of what is on air at a number of, e.g. five, of his favorite television channels.

Further, the captured live image may also be associated with further information on the television channel from which it was captured, such as meta data related to programs of the television channel, as provided within an electronic program guide (EPG). In this case, the captured live image may be included in the meta data and may be displayed on the EPG pages, providing a rich look and feel of the user interface of the EPG.

The capturing of the live image at the first receive may be performed repeatedly, e.g. periodically with a predetermined frequency. Alternatively or in addition, the capturing may also be performed when predetermined user interactions occur, e.g. when the user switches to a further television channel. Further, the capturing may also be performed when a change of program occurs at the television channel. Thereby, a multitude of different live images from different viewing situations may be captured and collected. This allows capturing live images from a multitude of television channels or programs.

Further, the transmitting of the captured live images from the server to the second receiver may also be performed repeatedly, e.g. periodically with a predetermined frequency. Alternatively or in addition, the transmitting of the captured live image from the server to the second receiver may also be performed upon a request of the second receiver.

For example, if the user navigates to an EPG screen and thumbnail pictures related to television channels and/or programs are required, then the second receiver may issue a call/request to the server. With the request, a television channel or program identifier identifying the television channels or programs displayed at the EPG screen may be transmitted to the server. Further, an identifier of the device including information, e.g. on device characteristics, or identifying the device, e.g. as a member having the right to access thumbnails, may be included in the request. In accordance with the information transmitted with the request, the server may return the captured live image to the second receiver.

Accordingly, a mechanism collecting thumbnails at the first receiver, adding the thumbnails e.g. to a central repository realized at the server, and redistributing these thumbnails to the second receiver is realized. Thereby, the second receiver may receive requested thumbnails, enhancing a television experience of its user, e.g. by enriching its EPG appearance or the appearance of any other application of the second receiver.

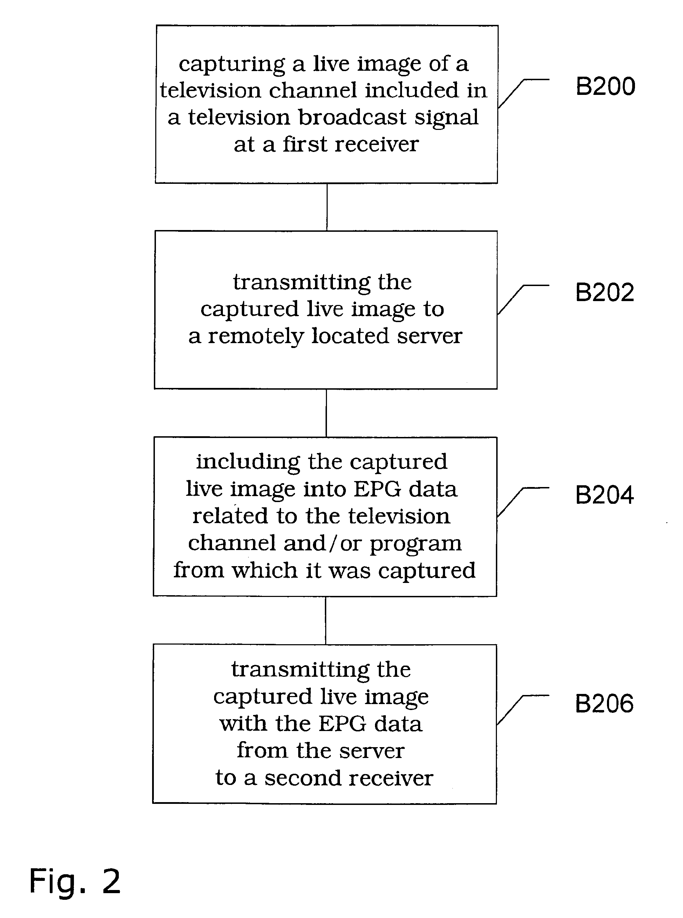

In Fig. 2, a further embodiment of the method is illustrated. The capturing of the live image and its transmission to the server is performed as discussed in Fig. 1. Therefore, blocks B200 and B202 may mutually correspond to blocks 100 and 102.

In the embodiment illustrated in Fig. 2, however, the live image is included, at the server side, into EPG data related to the television channel and/or program from which the captured live image was captured. The live image may then be distributed together with the EPG data from the server to the second receiver, the latter acting as a client retrieving the EPG data, e.g. via broadcast or internet.

Alternatively or in addition, the EPG data including the captured live image may also be published on a website, e.g. with an internet-based electronic program guide. Thereby, internet pages providing information on television channels and programs may be enriched with captured live images of what is currently on air.

In a further embodiment of the method, the captured live image may also be stored at the first receiver, where it may be displayed together with information associated with the television channel. This embodiment allows using locally captured live images at the receiving device itself, and thereby helps to reduce network traffic.

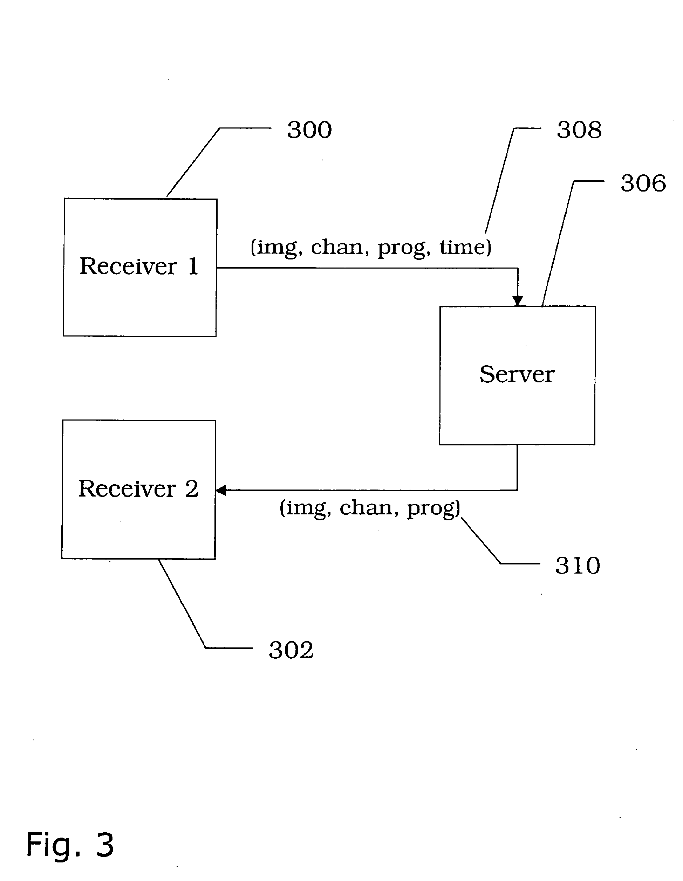

Fig. 3 illustrates a system including a first receiver 300 and a second receiver 302 as well as a server 306. As explained in the above, first receiver 300 captures a live image img from a currently viewed or tuned in video stream and transmits the captured live image img included in a data set 308 to server 306.

Data set 308 includes captured live image img, information from a television channel chan and a program prog from which captured live image img has been captured and a time at which the captured live image has been captured.

Server 306 transmits the captured live image img included in a further data set 310 to second receiver 302, data set 310 including captured live image img and information on television channel chan and program prog from which captured live image img has been captured. Captured live image img may then, at second receiver 302, be displayed together with information associated with television channel chan and/or program prog, e.g. within an EPG.

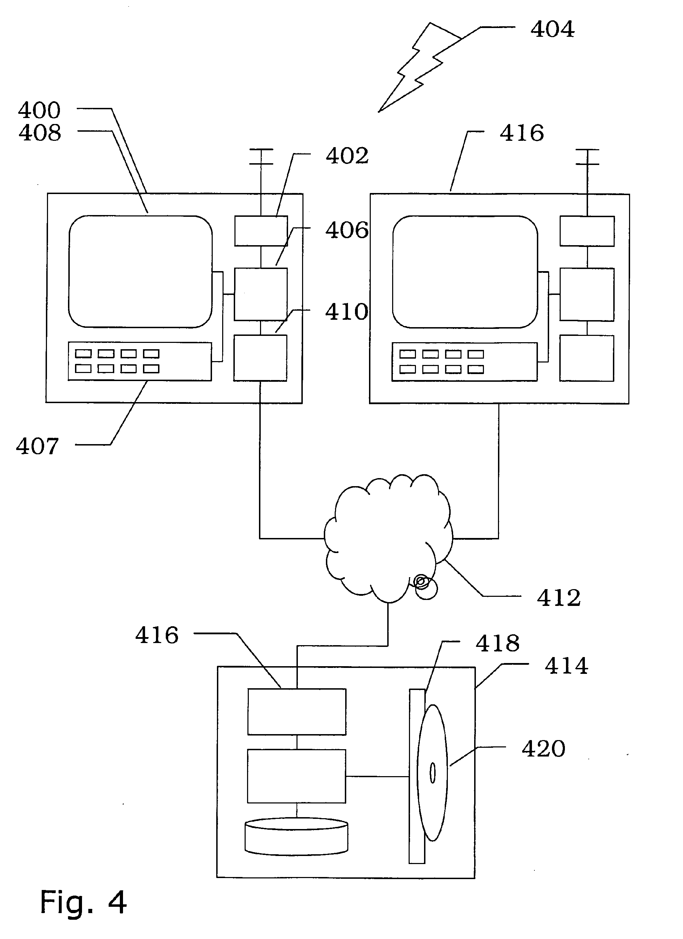

Fig. 4 illustrates a further embodiment of a system for providing television program information.

A first receiver 400 includes a tuner 402 which is adapted to receive a television broadcast signal 404. Video stream data of a television channel of broadcast signal 404 is provided to a data processor 406, which data processor 406 is adapted to capture the live image from the television channel, e.g. upon a channel switch performed by the user by means of keypad 407.

Further, data processor 406 may be adapted to associate the captured live image with information on a television channel from which the captured live image has been captured. Further, data processor 406 may also be adapted to associate the captured live images with further information on further television channels from which the further captured live images have been captured.

The captured live image and/or the further captured live images may be displayed at a display unit 408 together with the respective associated information.

Further, receiver 400 includes a transmission unit 410 which is adapted to transmit the captured live image via network 412 to a server 414. Further, transmission unit 410 is adapted to receive further captured live images from server 414.

The system as illustrated in Fig. 4 further includes a second receiver 416, which may, for example, include same or similar components as receiver 400. Receiver 416 therefore may also have the ability to capture live images from television channels, to transmit the further captured live images via network 412 to server 414, and to receive captured live images from server 414 via network 412.

In the embodiment, it is therefore possible that live images captured at receiver 400 are transmitted to receiver 416 via server 414, and vice versa.

For communicating with receivers 400 and 416, server 414 may include a transmission unit which is adapted to receive captured live images from receivers 400 and 416 and which is further adapted to transmit the captured live images to other receivers. Further, server 414 may include a reading unit 418 adapted to read a computer program product including program instructions from a data carrier 420. The program instructions may be adapted to cause a computer, for example server 414 and/or receivers 400 and 416, to execute embodiments of the above-described method.

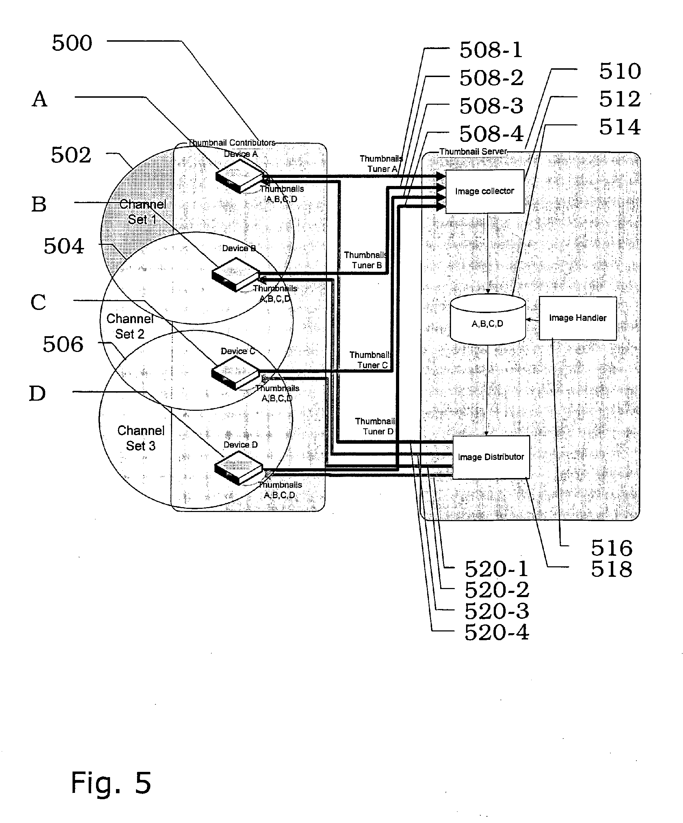

Fig. 5 illustrates a further embodiment of a system including a population 500 of television receivers A, B, C and D. Each of television receivers A, B, C and D may have access to multiple television signal interfaces, such as DVB tuners.

Depending on types of their television signal interfaces and on their location, television receivers A to D may have access to a multitude of television channels. In the embodiment, receivers A and B are equipped and/or located such that they receive a first channel set broadcast in a first network 502. Receivers B and C are equipped and/or located such that they receive a second channel set broadcast in a second network 504. Further, receivers C and D are located and/or equipped such that they receive a third channel set broadcast in a third network 506. For example, receivers A and B may include tuners adapted to receive a television broadcast signal broadcast via satellite, that receivers B and C are equipped with tuners adapted to receive a further broadcast signal transmitted by a terrestrial broadcast station and that receivers C and D are equipped to receive a still further television broadcast signal broadcast in a cable network.

In the embodiment, each of receivers A, B, C and D may capture live images from television channels of the respective channel set received. These captured live images may be sent via signals 508-1, 508-2, 508-3 and 508-4 to a server 510. Signals 508-1 to 508-4 may further include information, e.g. information on the channel, such as triplet information, information on the program, such as an event identifier, and information on the capturing time of the captured live image. The triplet information, as used in digital television broadcasting, includes three parts: a first part, also referred to as original network ID (OID), a second part, also referred to as transport stream ID (TSID), and a third part, also referred to as service ID (SID), identifying the channel and/or service. In the case of DVB, the triplet information may be written as DVB://OID.TSID.SID. According to the DVB standard, the triplet information may be used by television tuners to map a channel to the specific broadcast frequency.

Signals 508-1 to 508-4 are received by an image collector 512, which image collector 512 may perform as a network listener mechanism collecting the captured live images. The input may be processed on an "image by image" basis, and/ or batches of images delivered from each of receivers A to D may be processed. Further, image collector 512 may include a spooling mechanism for processing the input.

The captured live images received at image collector 512 may then be stored in storage 514, to which an image handler 516 may have access.

Image handler 516 may, for example, organize storage 514, e.g. by assembling live images captured from the same television channel and/or program. Further, image handler 516 may perform transformations on the image data, such as resizing the images to a format adapted to publish them, or as transcoding/converting the captured live images into different formats adequate for different device types of receivers. For example, the images may be resized and transcoded to be adapted for use in different receiving devices, such as, on the one hand, mobile viewing devices with restricted display capacity or, on the other hand, multimedia center personal computers with large display screens. These types of devices may support different formats according to their display and/or storage capacities.

Further, image handler 516 may also clear down expired live images, e.g. live images which have been captured a long time ago. For example, only captured live images may be kept which have been captured within a predetermined period of time preceding a current time. Further, duplicate images, i.e. images which have been captured from the same television channel at approximately the same time, exhibiting only minor differences, may be deleted. Thereby, a storage need of storage 514 may be reduced.

Further, image handler 516 may allocate the captured live images into different device groups. Thereby, captured live images of predetermined sizes of formats adapted for use in predetermined device types may be grouped together. This allows efficiently organizing image distribution.

Image distribution is performed by an image distributor 518 having access to storage 514. Image distributor 518 publishes the captured live images stored in storage 514 to population 500 of receivers via distribution signals 520-1, 520-2, 520-3 and 520-4.

Alternatively, the captured live images may also be published to a population other than population 500 of receivers. For example, population 500 of receivers capturing live images may be a relatively small group of receivers, while the captured live images are published to a wider population of receivers by image distributor 518.

Image distributor 518 may publish the captured live images on demand. For example, as a user of one of the receivers A to D navigates to an EPG screen, corresponding captured live images may be requested from server 510. Upon this request, image distributor 518 will query the image repository of storage 514 for the latest corresponding captured live images stored. Server 510 may then return the latest live images to the corresponding receiver. If no corresponding live images are available, also a default image may be returned.

In the embodiment, a plurality of live images of a plurality of television channels belonging to a plurality of channel sets is respectively captured at a plurality of receivers A to D. The captured live images are transmitted to server 510, and are further propagated to further receivers, e.g. receivers A to D of population 500. Thereby, each of receivers A to D of population 500 has access to recently captured live images, e.g. thumbnails, of all of the television channels to which any of receivers A to D has been tuning recently.

Accordingly, real time thumbnails are captured regularly in a potentially large, distributed population of television viewing devices, and then redistributed within the population or in an even bigger population. Reflecting the large number of television channels available in certain regions (approximately 700 channels are currently available in Germany), the embodiments allow an efficient collection and distribution of a large number of real time thumbnails (live images) that may be used for enriching electronic program guide data and for enhancing television experiences of the respective users.

Further, reflecting that not all of the channels are available to all of the receivers due to tuner and/or broadcast network restrictions, it becomes clear that collecting the real time thumbnails in a distributed manner facilitates the access of the receivers to all of the television channels available within the population.

It will be appreciated that a plurality of receivers operating in the field can be configured to collaborate with each other to provide an improved user experience with reduced infrastructure costs for the provider of the EPG service by providing near-live images in an EPG. Near-live is an indication that the live image captured at the first receiver is reproduced short time after its capture at a second receiver, subject to any network transmission delays and a processing time at the server.

However, it is also possible that some broadcasters or content owners may not wish for thumbnails captured by the method described. Business Rules may be implemented at the capturing receiver or the server to prevent transmission of the captured content to the second receiver, and to replace them with predetermined images which may be authorized in advance by the content owner. Such business rules may for example apply when broadcast programs have parental codes associated with them. Alternatively, the server may operate an algorithm to detect certain categories of thumbnail (such as pornography) and prevent their distribution and/or display at second receivers. In other embodiments, the metadata associated with the thumbnail for the program may include an age rating and the second receiver may be configured to detect this rating and display or not display thumbnails depending on the parental settings of that receiver.

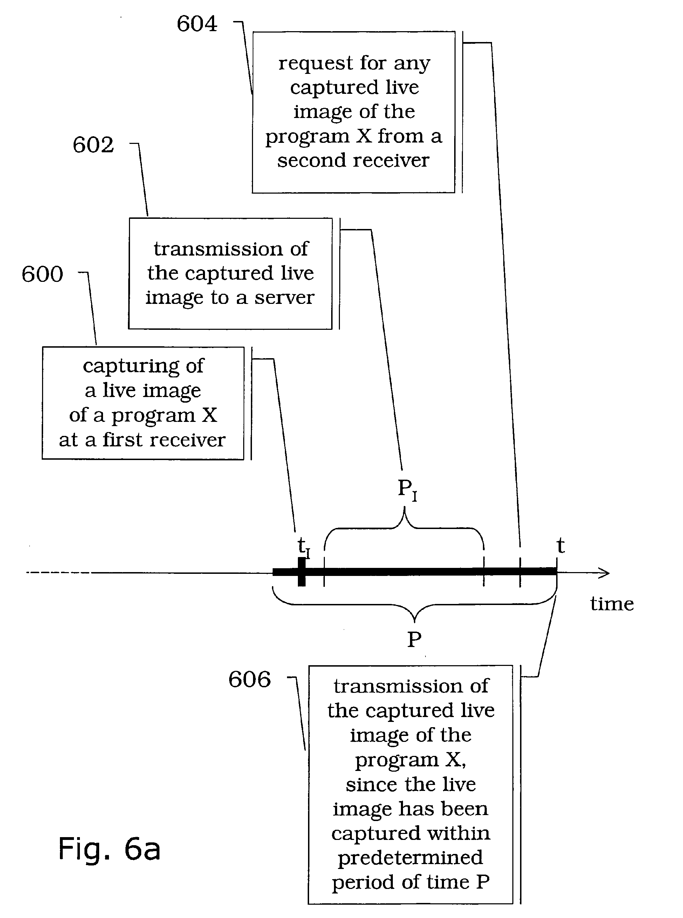

Fig. 6a illustrates an embodiment in which the captured live image is transmitted from a server to a requesting receiver depending on temporal conditions. In the embodiment, the captured live image is only transmitted from the server, e.g. server 510, to the requesting receiver, e.g. one of receivers A to D, if the live image has been captured within a predetermined period P of time preceding a current time t of transmitting the live image from the server to the requesting receiver.

In the case depicted, a live image of a program X is captured at a time of capturing t_{I} at a capturing receiver. At 602, the captured live image is transmitted to the server, which transmission is performed during period P_{I}. At 604, a request for any captured live image of the program X from the requesting receiver is received at the server. Upon this request, it is checked at the server side if any captured live image of the program X is available. In the case depicted, the live image captured at 600 is available. The captured live image is transmitted to the requesting receiver at 606, since the live image has been captured within predetermined period P of time preceding the current time t of transmitting the captured live image from the server to the requesting receiver.

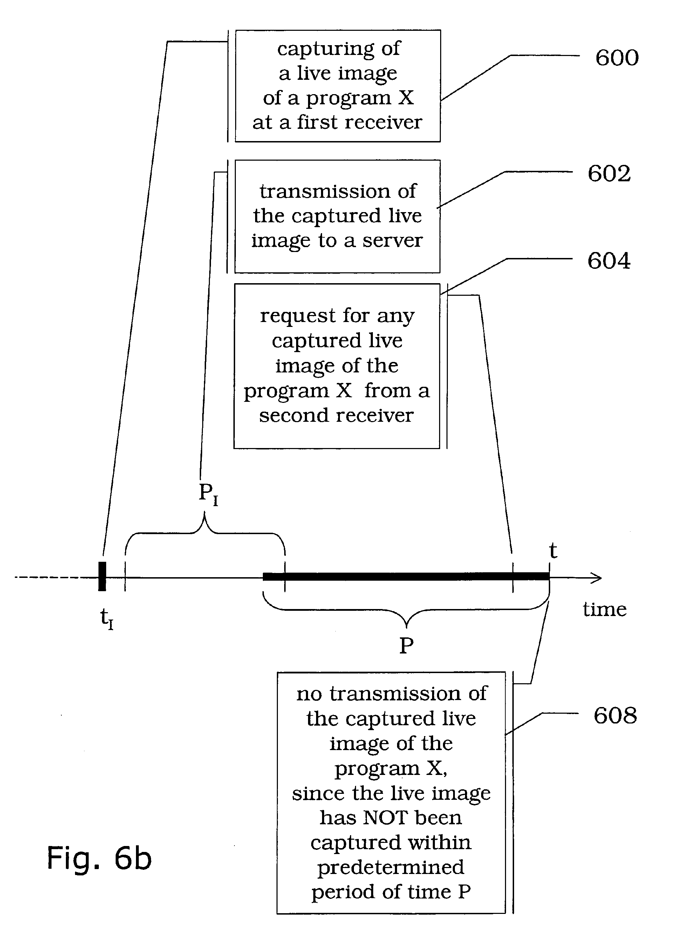

In Fig. 6b, temporal conditions are different, since at the current time t, no captured live image of the program X captured within the predetermined period P of time preceding the current time t is available. In the case depicted, time of capturing t_{I} of the captured live image at 600 precedes period P of time, such that the captured live image may be considered as having expired. In this case, a default image may be returned from the server to the requesting receiver, or alternatively the requesting receiver may generate a default image at its own. Period P of time may, for example, be set to a predetermined value, e.g. of five minutes.

If a captured live image has been judged to be expired as in the example of Fig. 6b, it may be possible that the server requests a captured live image from a receiver. Alternatively or additionally, the server may also tune to the respective program on its own and generate the "missing" (expired) live image.

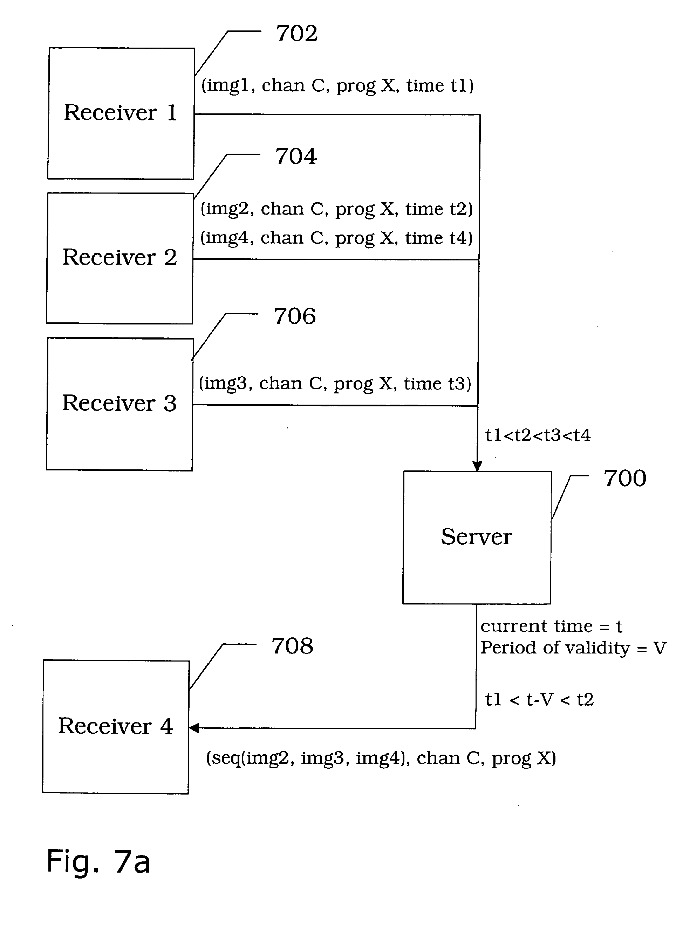

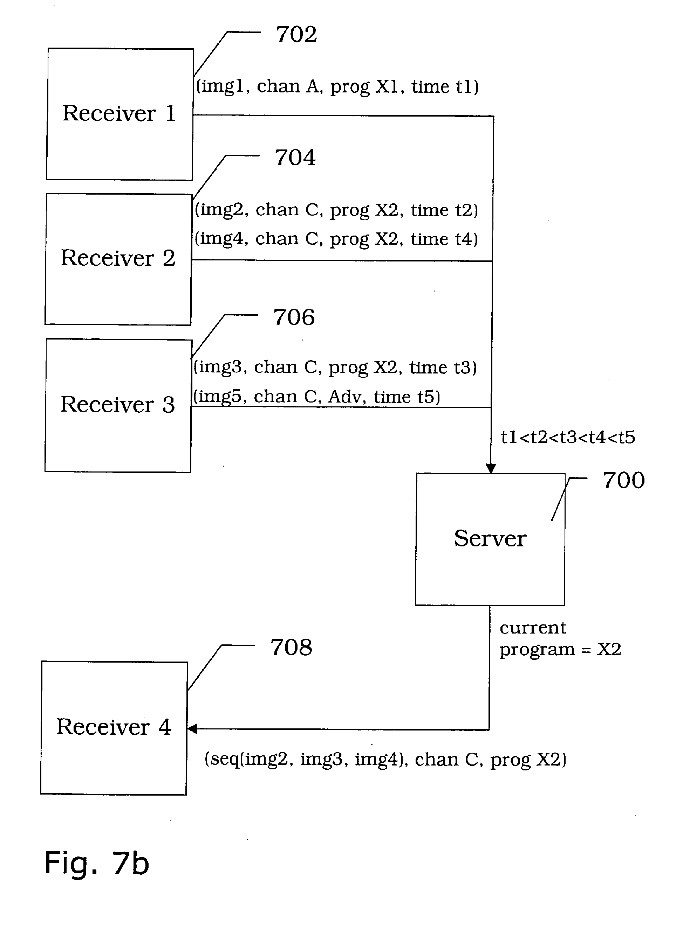

In Fig. 7a, distribution of live images under a further temporal condition is illustrated. A server 700 is connected to a first receiver 702, a second receiver 704 and a third receiver 706. At first receiver 702, a first image img1 is captured and transmitted to server 700 together with channel information C, program information X and a capturing time t1. Also from channel C and program X, images img2 and img4 are captured at second receiver 704 at time t2 and t4, respectively. Correspondingly, at third receiver 706, image img3 is captured from channel C and program X at time t3. In the case depicted, it is to be assumed that the points in time t1 to t3 are numbered in ascending order, i.e. t1 < t2 < t3 < t4.

Upon a request of a fourth receiver 708 at a current time t, server 700 checks based on a predetermined period of validity V, if images of channel C and program X are available. Server 700 thereby checks whether the available images have been captured before or after a limit of validity, which limit may be determined by subtracting period of validity V from current time t.

In the example, it is to be assumed that t1 precedes limit of validity t - P, but that time t2 lies within the period of validity, i.e. t - P < t2.

Therefore, images img2, img3 and img4 are to be considered as valid, e.g. as not having expired yet. Accordingly, server 700 assembles images img2, img3 and img4 to a sequence seq(img2, img3, img4) and transmits this sequence, together with information on channel C and program X from which the images img2 to img 4 have been captured, to fourth receiver 708.

Sequences of captured live images may be assembled, for example, at a capturing receiver (first receiver), at the server and/or at a requesting receiver (second receiver). For example, images img2 and img4 may be assembled to form a sequence at second receiver 704 and may be displayed in form of a sequence e.g. in a local EPG. The sequence may also be transmitted to server 700, where further images, e.g. image img3, may be included into the sequence. The sequence thus replenished may then be included, for example, as a playlist in an EPG website.

Further, after transmission of the sequence to the fourth receiver 708, the sequence may be further replenished with locally available images and/or included in locally available information on program X and channel C.

Including sequences of captured live images as playlists to information associated with television channels or to EPG data may give a lively impression of what is currently on air at the related channel, and may thereby provide a rich look and feel of a user interface.

In Fig. 7a, assembling of captured live images belonging to a same program, i.e. service, is illustrated. In the embodiment, first receiver 702 has tuned to channel A and captures image img1 of program X1 at a time t1. Second receiver 704 and third receiver 706, being tuned to channel C, capture images img2, img3 and img4 at respective times t2, t3 and t4. Before time t5, program X2 broadcast a channel C is interrupted for a commercial break and/or an advertizing spot, from which the capturing of image img5 at time t5 results. All images img1 to img5 are transmitted to server 700.

Based on the information that program X2 is currently broadcast at channel C, server 700 assembles images img2, img3 and img4 to a sequence seq, thereby excluding image img1 as captured from a different channel, channel A, and further excluding image img5, since not being related to current program X2. The resulting sequence seq is transmitted to fourth receiver 708. At forth receiver 708, sequence seq is included into information associated with channel C and program X2.

Thereby, it may be achieved that only live images captured from a certain program are displayed together with information associated with the program. It may accordingly be prohibited that after a recent start of a new program, live images of a preceding program are displayed together with information associated with the new program. Further, it may be assured that live images captured from commercial breaks are excluded from electronic program data.

In a further embodiment, however, live images captured from commercial breaks may also be distributed and displayed. This may be of interest, for example, in the above-mentioned embodiment including the predefined area with preview/cross-view images of favorite channels. With such an embodiment, a user may switch from a first channel to a second channel during a commercial break of a program of the first channel, while keeping in sight of the first channel through the cross-view image in the footer, thereby recognizing when the commercial break ends and the regular program is continued.

Although specific embodiments have been illustrated and described herein, it will be appreciated by those of ordinary skill in the art that a variety of alternate and/or equivalent implementations may be substituted for the specific embodiments shown and described without departing from the scope of the described embodiments. This application is intended to cover any adaptations or variations of the specific embodiments discussed herein. Therefore, it is intended that this invention be limited only by the claims and the equivalents thereof.

## Claims

1. A method of providing information, comprising:
capturing, at a first receiver receiving a television broadcast signal, a live image of a television channel of the television broadcast signal;
transmitting the captured live image from the first receiver to a server, the server being remotely located from the first receiver;
transmitting the captured live image from the server to a second receiver; and
displaying the captured live image together with information associated with the television channel at the second receiver.

2. The method according to claim 1, wherein a plurality of further live images of other television channels is respectively captured at a plurality of further first receivers, wherein the plurality of further captured live images is transmitted to the server, and wherein the server transmits at least one of the plurality of further captured live images to the second receiver.

3. The method according to any of the preceding claims, wherein the captured live image is a thumbnail.

4. The method according to any of the preceding claims, wherein the captured live image is only transmitted to the second receiver if the captured live image has been captured within a predetermined period of time preceding the time of transmitting the captured live image from the server to the second receiver.

5. The method according to any of the preceding claims, wherein the live image is captured from a program of the television channel, and wherein the captured live image is displayed together with information associated with the program.

6. The method according to any of the preceding claims, wherein at the first receiver, capturing the live image and transmitting the captured live image is performed repeatedly.

7. The method according to any of the preceding claims, wherein at the first receiver, capturing the live image and transmitting the captured live image is performed when a television channel switch occurs.

8. The method according to any of the preceding claims, wherein at the server, transmitting the captured live image to the second receiver is performed repeatedly and/or upon a request of the second receiver.

9. The method according to any of the preceding claims, wherein a sequence of captured live images, captured from a program of the television channel, is displayed at the second receiver together with information associated with the program.

10. The method according to any of the preceding claims, wherein the captured live image is transmitted to the server via a network other than a broadcast network over which the television broadcast signal is received.

11. The method according to any of the preceding claims, wherein the captured live image is stored at the first receiver and displayed at the first receiver together with information associated with the television channel.

12. A receiver, including:
a tuner adapted to receive a television broadcast signal;
a data processor adapted to capture a live image from a television channel of the television broadcast signal and adapted to associate a further captured live image with information on a further television channel;
a display unit adapted to display the further captured live image together with the information; and
a transmission unit adapted to transmit the captured live image to a server and adapted to receive the further captured live image from the server.

13. A server, including:
a transmission unit adapted to receive, from a first receiver, a captured live image from a television channel broadcast in a television signal, and adapted to transmit the captured live image to a second receiver in association with metadata, the metadata enabling the identification of the television channel or of a program of the television channel to which the captured live image relates.

14. A system, including:
a first receiver;
a second receiver; and
a server;
wherein the first receiver includes a tuner adapted to receive a television broadcast signal, a data processor adapted to capture a live image from a television channel of the television broadcast signal, and a transmission unit adapted to transmit the captured live image to the server,
wherein the server includes a transmission unit adapted to receive, from the first receiver, the captured live image, and adapted to transmit the captured live image to the second receiver together with metadata, the metadata enabling the identification of the television channel or of a program of the television channel to which the captured live image relates, and
wherein the second receiver includes a transmission unit adapted to receive the captured live image and the meta data from the server, a data processor adapted to associate the captured live image with information on the television channel or the program identified from the meta data, and a display unit adapted to display the captured live image together with the information.

15. A computer program product including program instruction adapted to cause a computer to execute a method comprising
capturing, at a first receiver receiving a television broadcast signal, a live image of a television channel of the television broadcast signal;
transmitting the captured live image from the first receiver to a server, the server being remotely located from the first receiver;
transmitting the captured live image from the server to a second receiver; and
displaying the captured live image together with information associated with the television channel at the second receiver.
